(19) Europäisches Patentamt
European Patent Office
Office européen des brevets

(11) **EP 2 123 698 A1**

(12) **EUROPEAN PATENT APPLICATION**
published in accordance with Art. 153(4) EPC

(43) Date of publication:
**25.11.2009 Bulletin 2009/48**

(51) Int Cl.:
***C08J 5/00*** (2006.01)     ***C08L 67/02*** (2006.01)
***C08L 67/04*** (2006.01)

(21) Application number: **08703618.2**

(22) Date of filing: **22.01.2008**

(86) International application number:
**PCT/JP2008/050771**

(87) International publication number:
**WO 2008/090870 (31.07.2008 Gazette 2008/31)**

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **22.01.2007 JP 2007011811**

(71) Applicant: **Kureha Corporation
Chuo-ku
Tokyo 103-8552 (JP)**

(72) Inventors:
• **SATO, Hiroyuki
Fukushima-Ken 974-8686 (JP)**

• **YAMANE, Kazuyuki
Fukushima-Ken 974-8686 (JP)**
• **HOKARI, Yuki
Nagoya-Shi, Aichi-Ken 455-0004 (JP)**
• **KOBAYASHI, Fuminori
Fukushima-Ken 974-8686 (JP)**

(74) Representative: **Albrecht, Thomas
Kraus & Weisert
Patent- und Rechtsanwälte
Thomas-Wimmer-Ring 15
80539 München (DE)**

(54) **AROMATIC POLYESTER RESIN MOLDINGS AND PROCESS FOR PRODUCTION THEREOF**

(57)     An aromatic polyester resin molded product, including: a matrix of 99 - 70 wt. parts of an aromatic polyester resin, and a disperse phase of 1 - 30 wt. parts (providing a total of 100 wt. parts together with the aromatic polyester resin) of a polyglycolic acid resin present in the matrix, wherein the molded product exhibits an oxygen permeability in its thickness direction which is in a range of 55 - 85 % of a minimum gas permeability $P_0$ determined by formula (1) below (Nielsen's theoretical formula):

$$P_0 = P_1 \ x \ \varphi_1 / (1 + (L/2W) \ x \ \varphi_2) \qquad \dots (1),$$

wherein L denotes a longer axis of the polyglycolic acid resin disperse phase; W denotes a shorter axis (thickness) of the polyglycolic acid resin disperse phase; $P_1$ denotes an oxygen permeability of the aromatic polyester resin in an oriented and crystallized state; $\varphi_1$ denotes a volumetric fraction of the aromatic polyester resin; and $\varphi_2$ denotes a volumetric fraction of the polyglycolic acid resin. The molded product can be produced by subjecting a primarily molded product of a prescribed composition to stretching and heat-treatment. As a result, the aromatic polyester resin molded product formed by adding a relatively small amount of polyglycolic acid resin is provided with an improved gas-barrier property while utilizing the effect of the added polyglycolic acid resin to the utmost.

EP 2 123 698 A1

FIG. 2

**Description**

[TECHNICAL FIELD]

The present invention relates to a further improvement in gas-barrier property of an aromatic polyester resin molded product obtained by addition of a polyglycolic acid resin, more specifically to such an aromatic polyester resin molded product improved in gas-barrier property, and a process for production thereof.

[BACKGROUND ART]

Aromatic polyester resins, as represented by polyethylene terephthalate, are excellent in shapability, mechanical properties, transparency, etc. and are widely used as a packaging material for various foods and containers for beverages, etc. However, as a packaging material, particularly for foods to be stored for a long period, the gas-barrier property of an aromatic polyester resin is not sufficient so that the deterioration of contents has been inevitable.

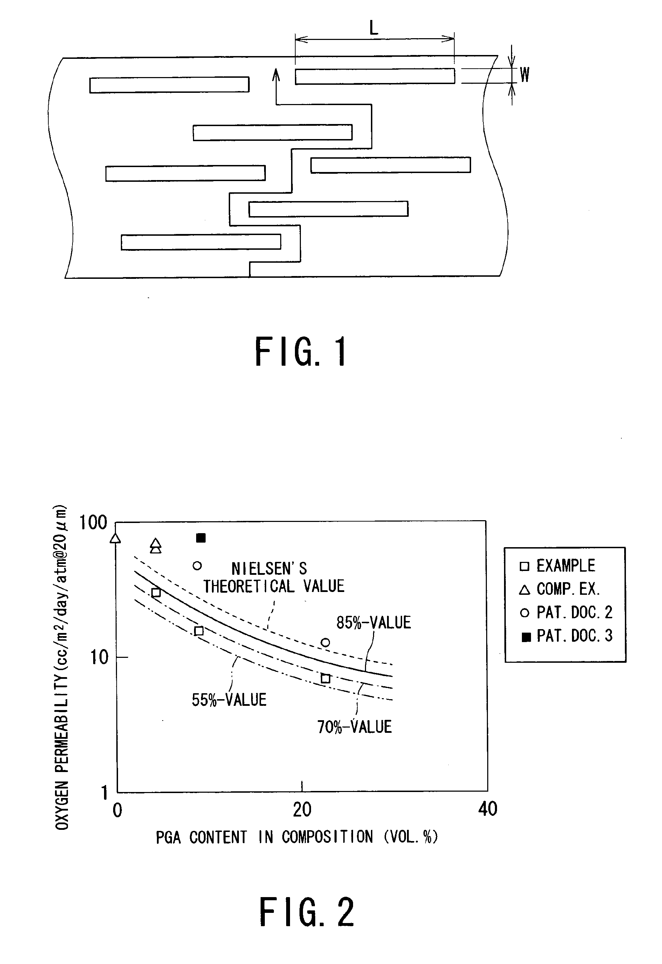

On the other hand, polyglycolic acid resin is known to have particularly excellent gas-barrier property in addition to heat resistance and mechanical strength (e.g., Patent document 1 listed below), and it has been proposed to add a small amount thereof to an aromatic polyester resin to provide an aromatic polyester resin composition improved in gas-barrier property of the latter (Patent documents 2 and 3). Particularly, in order to improve the gas-barrier property of an aromatic polyester resin, while maintaining the excellent mechanical property thereof, it is preferred to utilize to the utmost the gas-barrier property improvement effect of the polyglycolic acid resin added in a relatively small amount. In a molded product of such an aromatic polyester resin composition, it is known that the dispersed phase of the polyglycolic acid resin added in a relatively small amount in the aromatic polyester resin matrix contributes to improvement in gas-barrier property (Patent document 3). On the other hand, about the gas transmittance through a sheet-form resin product containing the dispersed phase of such a gas intercepting disperse phase, a Nielsen's theoretical formula in the form of formula (1a) below in consideration of an increase of the gas permeation path by existence of a gas intercepting disperse phase (see attached Fig. 1) is known (Nonpatent document 1 listed below) :

$$P_F / P_u = \varphi_p / (1 + (L/2W) \varphi_F) \qquad \ldots\ldots (1a),$$

wherein $P_F$ and $P_u$ denote gas permeabilities of the polymer containing the disperse phase and the polymer not containing the disperse phase, respectively; $P_F$ denotes a volumetric fraction of the polymer; and $\varphi_F$ denotes a volumetric fraction of the disperse phase; L denotes a longer axis of the disperse phase; and W denotes a thickness of the dispersed phase.

However, neither of the aromatic polyester resin molded products obtained according to the above-mentioned Patent documents 2 and 3, has succeeded in provided an effect of increasing the gas-barrier property (effect of reducing the permeability) as expected by the above Nielsen's formula when the polyglycolic acid resin disperse phase is used as the gas-intercepting disperse phase.

Patent document 1: JP-A 10-60136
Patent document 2: U.S. Patent No. 4565851
Patent document 3: JP-A 2005-200516
Nonpatent document 1: L. E. Nielsen; J. Macromol. Sci.(CHEM), A1(5),929-942(1967).

[DISCLOSURE OF INVENTION]

Accordingly, a principal object of the present invention is to provide an aromatic polyester resin molded product obtained by adding a relatively small amount of a polyglycolic acid resin while utilizing to the utmost the gas-barrier property-improvement effect of the added polyglycolic acid resin, and a process for production thereof.

Having been developed to accomplish the above-mentioned object, the aromatic polyester resin molded product of the present invention comprises: a matrix of 99 - 70 wt. parts of an aromatic polyester resin, and a disperse phase of 1 - 30 wt. parts (providing a total of 100 wt. parts together with the aromatic polyester resin) of a polyglycolic acid resin present in the matrix, wherein the molded product exhibits an oxygen permeability in its thickness direction which is in arrange no 55 - 85 % of a minimum gas permeability $P_0$ determined by formula (1) below (Nielsen's theoretical formula):

$$P_0 = P_1 \times \varphi_1 / (1 + (L/2W) \times \varphi_2) \qquad \ldots. (1),$$

wherein L denotes a longer axis of the polyglycolic acid resin disperse phase; W denotes a shorter axis (thickness) of the polyglycolic acid resin disperse phase; $P_1$ denotes an oxygen permeability of the aromatic polyester resin in an oriented and crystallized state; $\varphi_1$ denotes a volumetric fraction of the aromatic polyester resin; and $\varphi_2$ denotes a volumetric fraction of the polyglycolic acid resin.

According to the present inventors' study, it has been confirmed possible to obtain such an aromatic-polyester-resin molded product through a process including subjecting a primarily molded product of a prescribed composition to stretching and heat-treatment. Thus, the process for producing the above-mentioned aromatic polyester resin molded product according to the present invention, comprises: subjecting a primarily molded product of a melt-kneaded resin composition comprising 99 - 70 wt. parts of an aromatic polyester resin, and 1 - 30 wt. parts (providing a total of 100 wt. parts together with the aromatic polyester resin) of a polyglycolic acid resin to stretching and then to heat-treatment.

BRIEF DESCRIPTION OF THE DRAWINGS

Fig. 1 is a schematic model view illustrating an increase in gas permeation path due to a gas-intercepting disperse phase on which the Nielsen's theoretical formula is based.
Fig. 2 is a graph showing oxygen permeabilities of the films of Examples and Comparative Examples and conventional data correlated with theoretical values according to Nielsen's theoretical formula.

BEST MODE FOR PRACTICING THE INVENTION

(Aromatic polyester resin)

The molded resin product of the present invention contains, as a principal resin component, an aromatic polyester resin, specific examples of which may include: polyethylene terephthalate, polytrimethylene terephthalate, polybutylene terephthalate, polyhexamethylene terephthalate; polyethylene-2, 6-naphthalate, polytrimethylene-2, 6-naphthalate, polybutylene-2, 6-naphthalate, polyhexamethylene-2, 6-natphthalate, polyethylene isophthalate, polytrimethylene isophthalate, polybutylene isophthalate, polyhexamethylene isophthalate, poly-1, 4-cyclohexane-dimethanol terephthalate, and polybutylene adipate terephthalate. Among these, polyethylene terephthalate is preferably used. Herein, the term polyethylene terephthalate (hereinafter sometimes abbreviated as "PET") is used to inclusively mean a polyester principally comprising a terephthalic acid unit derived from terephthalic acid or an ester derivative thereof, and an ethylene glycol unit derived from ethylene glycol or an ester derivative thereof, wherein at most 10 mol.% of each unit can be replaced with another dicarboxylic acid, such as phthalic acid, isophthalic acid or naphthalene-2, 6-dicarboxylic acid, or another diol such as diethylene glycol, or a hydroxycarboxylic acid, such as glycolic acid, lactic acid or hydroxy-benzoic acid.

The aromatic polyester resin may preferably have an intrinsic viscosity (as a measure corresponding to a molecular weight) in the range of 0.6 - 2.0 dl/g, particularly 0.7 - 1.5 dl/g. Too low an intrinsic viscosity makes the shaping difficult, and too high an intrinsic viscosity results in generation of a large shearing heat.

While aromatic polyester resin are generally produced through polycondensation by using compounds of metals, such as antimony (Sb), germanium (Ge), tin (Sn), zinc (Zn), aluminum (Al) and titanium (Ti), and the physical properties of the product may somewhat change depending on catalyst species used, it is possible in the present invention to use any aromatic polyester resins, inclusive of commercial products, obtained by using any metal compounds (catalyst). As a metal compound (catalyst), it is preferred to use an organic complex or oxide, especially an oxide. The content in the aromatic polyester resin may be usually at least 1 ppm and less than 1000 ppm, and the use of a larger amount causes coloring of the resultant aromatic polyester resin and an increase manufacturing cost.

The molded resin product of the present invention comprises the above-mentioned aromatic polyester resin, as a principal component, in an amount of 99 - 70 wt. parts, preferably 95 - 75 wt. parts. If used in excess of 99 wt. parts, it becomes difficult to attain the intended increase in gas-barrier property because the amount of the polyglycolic acid resin is decreased correspondingly. On the other hand, below 70 wt. parts so as to attain a corresponding increase of the polyglycolic acid resin amount, the decrease in moisture resistance of the resultant composition can be problematic.

(Polyglycolic acid resin)

The polyglycolic acid resin used in the present invention in combination with the above-mentioned aromatic polyester resin with germanium compound (catalyst) may be one obtained by polycondensation of glycolic acid or by ring-opening polymerization of glycolide, but it is preferred to use a polyglycolic acid resin obtained by ring-opening polymerization of glycolide. This is because a polyglycolic acid resin obtained by polycondensation of glycolic acid cannot provide a desirably high molecular weight to provide the resultant resin composition with desired mechanical strength but is caused to involve increased residual terminal hydroxyl group and carboxyl group, which lead to glycolide gas generation during the melt-processing together with the aromatic polyester resin. Particularly, it is preferred to use a polyglycolic acid resin having a terminal carboxylic acid concentration of at most 50 eq/ton, further preferably at most 30 eq/ton. In contrast thereto, polycondensation-type polyglycolic acid resin has a terminal carboxylic acid content on the order of 100 - 400 eq/ ton.

The polyglycolic acid resin (hereinafter sometimes referred to as "PGA resin") used in the present invention may include: glycolic acid homopolymer (PGA) obtained by ring-opening polymerization of glycolide alone and consisting only of a recurring unit represented by -(O · CH$_2$ · CO)- and also a ring-opening copolymer of glycolide with a cyclic co-monomer, such as lactides (cyclic dimer esters of hydroxycarboxylic acids other than glycolic acid) including lactide (cyclic dimer ester of lactic acid); ethylene oxalate (i.e., 1, 4-dioxane-2, 3-dione); lactones, such as β-propiolactone, β-butyrolactone, pivalolactone, γ-butyrolactone, δ-valerolactone, β-methyl-δ-valerolactone, and ε-caprolactone; carbonates, such as trimethylene carbonate; ethers, such as 1, 3-dioxane; ether-esters, such as dioxanone; and amides, such as ε-caprolactam. However, in order to impart a high level of gas-barrier property to the aromatic polyester resin, it is preferred to retain at least 70 wt.% of the above-mentioned glycolic acid recurring unit in the PGA resin, and PGA homopolymer is particularly preferred.

PGA resin should preferably have a molecular weight (in terms of Mw (weight-average molecular weight) based on polymethyl methacrylate as measured by GPC using hexafluoroisopropanol solvent; the same as hereinafter, unless otherwise specified) which is preferably larger than 100,000, particularly in the range of 120,000 - 500,000. If the molecular weight is not larger than 100,000, it becomes difficult to provide a shaped product having a desired strength through the melt-kneading with the aromatic polyester resin. On the other hand, if the PGA resin has an excessively large molecular weight, the composition is liable to be colored because of much heat evolution due to the shearing in the melt-kneading. A melt-viscosity may be used as a measure of preferred molecular weight of the PGA resin. More specifically, the PGA resin may preferably exhibit a melt-viscosity of 100 - 20000 Pa · s, more preferably 100 - 10000 Pa · s, particularly 200 - 2000 Pa · s as measured at 270°C and a shearing speed of 122 sec$^{-1}$.

As mentioned above, a PGA resin obtained through a process of subjecting glycolide (and also a small amount of another cyclic monomer, as desired) to ring-opening polymerization under heating, is preferably used in the present invention. The ring-opening polymerization is substantially a ring-opening polymerization according to bulk polymerization. The ring-opening polymerization is generally performed at a temperature of at least 100°C in the presence of a catalyst. In order to suppress the lowering in molecular weight of the PGA resin during melt-kneading, it is preferred to suppress the residual glycolide content in the PGA resin used to below 0.5 wt.%, preferably below 0.2 wt.%, particularly below 0.1 wt.%. For this purpose, it is preferred to control the system at a temperature of below 190°C, more preferably 140 - 185°C, further preferably 160 - 180°C, so as to proceed with at least a terminal period (preferably a period of monomer conversion of at least 50%) of the polymerization in a solid phase as disclosed in WO2005/090438A, and it is also preferred to subject the resultant polyglycolic acid to removal of residual glycolide by release to a gaseous phase. As the ring-opening polymerization catalyst, it is possible to use oxides, halides, carboxylic acid salts, alkoxides, etc., of tin, titanium, aluminum, antimony, zirconium, zinc, germanium, etc. Among these, it is particularly preferred to use a tin compound, especially tin chloride in view of polymerization activity and colorlessness. However, there has been still observed a tendency that as the residual tin (calculated as metal) content in the resultant PGA resin is increased, the glycolide gas generation during the melt-processing or later processing with the aromatic polyester resin is increased, so that the residual tin (as metal) content should preferably be at most 70 ppm (or at most ca. 100 ppm calculated as tin chloride).

(Melt-kneading · Primary molding)

In order to obtain the molded resin product of the present invention, a primarily molded product is first formed by subjecting 99 - 70 wt. parts of the above-mentioned aromatic polyester resin and 1 - 30 wt. parts of the polyglycolic acid resin to primary molding.

For the melt-kneading, a single-screw extruder and a twin screw extruder may preferably be used for a commercial use but a plastomill, a kneader, etc., may also be used. The melt-kneading temperature may generally be determined as a temperature above a higher one of the melting points of the two components to be melt-kneaded, i.e., the aromatic polyester resin and the polyglycolic acid resin. In view of the fact that the melting point of the aromatic polyester resin, particularly polyethylene terephthalate (PET), is ordinarily ca. 260°C and that of PGA is ca. 220°C, a temperature of at least ca. 260°C is generally adopted but it is preferred to adopt an optimum temperature based on the melting point of an aromatic polyester resin actually used. As a certain degree of heat evolution can occur accompanying the melt-kneading, it is possible correspondingly to set the temperature of the melt-kneading apparatus to the melting point or therebelow of the aromatic polyester resin. The melt-kneading temperature, preferably the extruder set temperature, may generally be in the range of 220 - 350°C, more preferably 240 - 330°C, further preferably 260 - 360°C. A temperature below 220°C is insufficient or requires a long time for formation of a melt state and is further liable to be insufficient for development of barrier property of the resultant composition. On the other hand, a melt-kneading temperature in excess of 350°C is liable to cause coloring or a lowering of barrier property due to occurrence of decomposition or side reactions.

The melt-kneading time should be sufficient for formation of a mixing state of both resin components while it may depend on the shape, position and rotation conditions of a screw in the stirring apparatus or extruder. It is ordinarily 30 sec. to 60 min., preferably 1 - 45 min., more preferably 1.5 - 30 min. Below 30 sec., a uniform mixing state cannot be formed due to insufficient melt-kneading, thus it becomes difficult to develop barrier property. On the other hand, in excess of 60 min., the decomposition or side reaction is liable to occur, leading to insufficient development of barrier property.

During the melt-kneading, various stabilizers may be added, as desired. A representative example of such optionally added stabilizers may be a metal-deactivating agent, specific examples of which may include: phosphorus-containing compounds, such as phosphoric acid, trimethyl phosphate, triphenyl phosphate, tetra-ethylammonium-hydroxide-3, 5-di-t-butyl-4-hydroxybenzyl- phosphoric acid diethyl ester (including "Irganox 1222" made by Ciba-Geigy A.G. as a commercially available example), calcium-diethylbis [[[3,5-bis(1,1-dimethyl)-4hydroxyphenyl]- methyl]phosphate ("Irganox 1425WL"), tris (2,4-di-t-butylphenyl) phosphite ("Irganox 168"), and further phosphoric acid esters having a pentaerythritol skeleton, such as cyclic neopentane-tetra-il-bis (2,6-di-t-butyl-4-methylphenyl phosphite ("ADEKASTAB PEP-36", made by K.K. ADEKA); and phosphorus compounds having at least one hydroxyl group and at least one long-chain alkyl ester group, such as a nearly equi-molar mixture of mono- and di-stearyl phosphates ("ADEKASTAB AX-71"); hindered phenol compounds, such as tetrakis [methylene-3-(3,5'-di-t-butyl-4'-hydroxyphenyl) propionatemethane] ("Irganox 1010"); and compounds generally showing a deactivating action against polyester polymerization catalysts, inclusive of hydrazine compounds having a -CO-NHNH-CO unit, such as bis [2-(2-hydroxy- benzoyl)-hydrazine] dodecanoic acid and N,N'-bis [3-(3,5-di-tert-butyl- 4-hydroxyphenyl) propionyl] hydrazine, and further triazole compounds, such as 3-(N-salicyloyl) amino-1,2,4-triazole.

Such a metal-deactivating agent may preferably be one which is mutually soluble in a molten state with or can be dissolved in either of the aromatic polyester resin and the PGA resin. As the melt-kneading temperature is relatively high, one having properties such as a high melting point and a high decomposition temperature, is preferably used. Such a metal-deactivating agent, when used, may preferably be added in a proportion of 0.001 - 1 wt. % with respect to the total of the aromatic polyester resin and the polyglycolic acid resin.

It is also possible to add a carbodiimide compound or oxazoline compound known as a moisture resistance-improving agent, in an amount of at most 1 wt.% of the PGA resin (ring-opening polymerization).

In case where the aromatic polyester resin and/or PGA resin already contain the above-mentioned stabilizer, the resins can be used as they are, or an appropriate amount of the stabilizer may be added, as desired.

The resin composition after the melt- kneading is formed into a primarily molded product having a certain thickness, such as a sheet or a hollow product, by press molding, T-die molding, blow molding, etc.

According to the present invention, the primarily molded product is then subjected to stretching and heat treatment. If even either one of the stretching and heat treatment is omitted, the gas-barrier property-improvement effect intended by the present cannot be acquired.

The stretching may be effected uniaxially or biaxially so as to provide an areal ratio at least 4 times, preferably 9 - 16 times. A stretching ratio of below 4 times is liable to be insufficient for improvement of gas-barrier property. Too large a stretching ratio is liable to result in a rather lower gas-barrier property due to severance of polymer chains, etc. The stretching is performed at a temperature not below the glass transition points but below the melting points of the polyglycolic acid resin and aromatic polyester resin. More specifically, it is preferred to carry out in the temperature range of 90-120 °C, particularly 80-130°C.

The heat treatment is performed at a temperature where polyglycolic acid resin crystallizes. More specifically, a temperature at or above the crystallization temperature (usually about 95 °C) and below the melting point of the polyglycolic acid resin, is adopted. However, when the melting point of the aromatic polyester resin is lower than the melting point of the polyglycolic acid resin, a temperature below the melting point of the aromatic polyester resin is preferred. More specifically, it is preferred to effect the heat treatment at a temperature of 100-220 °C, more preferably 150-210 °C, for 30 sec. -ca. 5 min. If the heat treatment time is too short, the gas-barrier property improvement effect obtained through the crystallization becomes scarce, and too long, the efficiency is lowered.

The molded resin product of the present invention obtained by stretching and heat-treating the primarily molded product of a prescribed composition under suitable conditions according to the present invention, is provided with a very low oxygen permeability (improved gas-barrier property) as low as 55 to 85% of Nielsen's theoretical values (See Example appearing herein after).

The molded resin product of the present invention obtained in this way may be used as an independent molded product, but also as a laminate product with another thermoplastic resin. When used as a part of such a laminate product, the molded resin product layer of the present invention may preferably be used as a surface layer not directly contacting a liquid or as a core layer sandwiched between other thermoplastic resin layers. As such other thermoplastic resins, it is possible to use an arbitrary thermoplastic resin which allows extrusion lamination, dry lamination or wet lamination, coating, or co-extrusion together with the molded resin product layer of the present invention. It is however most preferred to use an aromatic polyester resin. Other preferred examples of such other thermoplastic resins may include: aliphatic polyesters other than polyglycolic acid, such as polylactic acid, succinic acid-glycol condensate and polycaprolactone.

EXAMPLES

Hereinbelow, the present invention will be described more specifically based on Examples and Comparative Examples. The characteristic values described herein including the following Examples are based on those measured or evaluated according to the following methods.

[Intrinsic viscosity]

A PET sample in an amorphous state was dissolved in phenol/ 1,1,2,2-tetrachloroethane and subjected to measurement of intrinsic viscosity (IV, unit: dl/g) by means of an Ubbelohde viscometer No.1 (viscometer constant: 0.1173) according to JIS K7390.

[Molecular weight]

Ca. 10 mg of each polymer sample was dissolved in 0.5 ml of high-grade dimethyl sulfoxide on an oil bath at 150°C. The solution was cooled by cold water, and a 5 mM-sodium trifluoroacetate solution in hexafluoroisopropanol (HFIP) was added to the solution up to a total volume of 10 ml. The solution was filtered through a 0.1 $\mu$m-membrane filter of PTFE and then injected into a gel permeation chromatography (GPC) apparatus to measure a weight-average molecular weight (Mw). Incidentally, the sample solution was injected into the GPC apparatus within 30 min. after the dissolution.

<GPC measurement conditions>

Apparatus: "Shodex-104", made by Showa Denko K.K.
Columns: 2 columns of "HFIP-606M" connected in series with one pre-column of "HFIP-G".
Column temperature: 40°C
Fluent: 5 mM-sodium trifluoroacetate solution in HFIP.
Flow rate: 0.6 ml/min.
Detector: RI (Differential refractive index detector)
Molecular weight calibration: Performed by using 7 species of standard polymethyl methacrylate having different molecular weights.

[L/W of PGA disperse phase]

From a stretched and heat-treated film, a ca. 1 mm-wide sample was cut out with a glass knife by cutting deeply at right angles into a face of the film. The sample was set in an etch apparatus ("IE-10"made by K.K. Eiko Engineering), oxygen in the chamber was removed, and an argon atmosphere was formed, whereby ion etching of the cut surface was carried out under the conditions of voltage: 15kV, electric current: 10mA, and time: 3 min.

The etched surface (a section in the thickness direction of a film) of the sample) was then observed and photographed through a super-depth form quantitative microscope ("VK-8500" made by Keyence K.K.; magnification: 5000, view field: ca. 300-$\mu$m$^2$), and the picture was recorded electronically. The recorded picture was binary-coded (into 2 colors) by using an image-analysis software ("IP-1000" by Asahi Kasei K.K.), and the major axes (L) and minor axes (equivalent to the thickness W) of all the PGA disperse phases having major axes in the range of 1.0-5.0 pm were obtained, and L/W was calculated based on averages of these values. Incidentally, Example 1 described hereinafter provided, as averages, L= 2.4$\mu$m, W= 0.067$\mu$m, and L/W=37.

[Oxygen permeability]

A film sample was subjected to measurement under the conditions of 23°C and a relative humidity of 90 % by means of an oxygen permeability meter ("OX-TRAN 100", made by Mocon Co.). The measurement result was recorded as an oxygen permeability normalized at a thickness of 20 $\mu$m in the unit of cc/m$^2$/day/atm.

[Polyglycolic acid (PGA) Production Example]

Into a hermetically sealable vessel equipped with a jacket, 355 kg of glycolide (made by Kureha Corporation; impurity contents: glycolic acid 30 ppm, glycolic acid dimer 230 ppm, moisture 42 ppm) was added, and the vessel was hermetically sealed up. Under stirring, the contents were melted by heating up to 100°C by circulation of steam to the jacket, thereby forming a uniform solution. To the solution under stirring, 10.7 g of tin dichloride dehydrate and 1220 g of 1-dodecyl alcohol were added.

While being held at a temperature of 100°C, the contents were transferred to plural tubes of metal (SUS304) and 24 mm in inner diameter held within a polymerization apparatus. The apparatus included a body installing the tubes and an upper plate, each equipped with a jacket allowing circulation of a heat medium oil thereinto. After the contents were transferred into the tubes, the upper plate was immediately affixed.

A heat medium oil at 170°C was circulated to the jackets for the body and the upper plate, and this state was held for 7 hours. After the 7 hours, the heat medium oil was cooled to room temperature, the upper plate was removed, and the body was vertically rotated upside down to take out lumps of produced polyglycolic acid. The lumps were pulverized by a pulverizer and then dried at 120°C overnight to obtain a PGA pulverizate..

To the above-obtained PGA pulverizate, an almost equi-molar mixture of mono- and di-stearyl acid phosphates ("ADEKASTAB AX-71", made by K.K. ADEKA) as a metal deactivating agent was added in a proportion of 300 ppm with respect to the PGA pulverizate, and the resultant mixture was extruded through a twin-screw extruder to obtain PGA pellets. The thus-obtained PGA pellets were heat-treated at 200°C for 9 hours in a drier with a nitrogen atmosphere. The resultant PGA pellets exhibited a weight-average molecular weight of 215,000.

<Extrusion conditions>

Extruder: "TEM-41SS", made by Toshiba Kikai K.K. Temperature set: The sections C 1 - C10 disposed sequentially from the discharge position and the die were set to temperatures of 200°C, 230°C, 260°C, 270°C, 270°C, 270°C, 270°C, 250°C, 240°C, 230°C and 230°C, respectively.

[Example 1]

95 wt. parts of polyethylene terephthalate (PET) pellets (" 1101", made by KoSa Co.; antimony content: 201 ppm in PET) and 5 wt. parts of the above PGA pellets, were uniformly blended in a dry state; and melt-processed through a twin-screw extruder equipped with a feeder ("LT-20", made by K.K. Toyo Seiki) under the condition of residence time in the extruder of 5 min. to obtain a pellet-form resin composition.

The thus-obtained pellet-form resin composition was sandwiched with aluminum sheets and placed on a heat press machine at 270°C, followed by heating for 3 min. and pressing under 5 MPa for 1 min. Immediately thereafter, the sandwich was transferred to a water-circulated press machine and held under a pressure of 5 MPa for ca. 3 min. to obtain an amorphous press sheet.

The thus-obtained press sheet was fixed on a frame, held at 100°C for 1 min. and then subjected to blow stretching until the thickness was reduced to ca. 1/10 (ca. 10 times in terms of an areal ratio). The resultant stretched film was heat-treated at 200 °C for 1min. in a relaxed state to obtain a 26 μm-thick stretched and heat-treated film.

(Extrusion conditions)

Temperatures: C1: 250°C, C2: 290°C, C3: 290°C, die: 290°C
Screw rotation speed: 30 rpm.
Feeder rotation speed: 20 rpm.
Residence time in the extruder: 5 min.

[Example 2]

A stretched and heat-treated film was prepared in the same manner as in Example 1 except that the blend ratio was changed to 90 wt. parts of the PET pellets and 10 wt. parts of the PGA pellets.

[Example 3]

A stretched and heat-treated film was prepared in the same manner as in Example 1 except that the blend ratio was changed to 75 wt. parts of the PET pellets and 25 wt. parts of the PGA pellets.

[Comparative Example 1]

An amorphous press sheet was prepared in the same manner as in Example 1, then heat-treated at 200 °C for 1 min. and subjected to simultaneous biaxial stretching at longitudinal and lateral stretch ratios of 3 × 3 times to obtain a stretched film.

[Comparative Example 1]

An amorphous press sheet was prepared in the same manner as in Example 1, and then heat-treated at 200 °C for 1 min. to obtain a non-stretched heat-treated film (thickness: ca. 32 $\mu$m).

[Comparative Example 3]

A stretched and heat-treated film was prepared in the same manner as in Example 1 except that only 100 wt. parts of PET pellets were melt-processed through the twin-screw extruder.

General features of the above-described Examples Comparative Examples, and PGA disperse phase L/W ratios and oxygen permeabilities of the resultant films, are inclusively shown in the following Table 1.

[Table 1]

| Example | | 1 | 2 | 3 | Comp. 1 | Comp. 2 | Comp. 3 |
|---|---|---|---|---|---|---|---|
| PET/PGA weight ratio | - | 95/5 | 90/10 | 75/25 | 95/5 | 95/5 | 100/0 |
| PET/PGA volume ratio | - | 95.5/4.5 | 91.0/9.0 | 77.2/22.8 | 95.5/4.5 | 95.5/4.5 | 100/0 |
| Stretching ratio | - | 10 times | 10 times | 10 times | 3x3 times | - | 10 times |
| Heat treatment temp. | °C | 200 | 200 | 200 | - | 200 | 200 |
| Heat treatment time | min. | 1 | 1 | 1 | - | 1 | 1 |
| Product film | | | | | | | |
| PGA dispersed phase L * 1 | $\mu$m | 2.4 | 2.7 | 2.5 | 3 | 0.5 | - |
| PGA dispersed phase W * 1 | $\mu$m | 0.07 | 0.07 | 0.07 | 0.08 | 0.3 | - |
| PGA dispersed phase L/W * 1 | - | 37 | 37 | 37 | 32 | 2 | - |
| O2 permeability (measured) | *2 | 31.5 | 15.6 | 7.6 | 65 | 70 | 78.1 |
| O2 permeability (Ratio to Nielsen's value) | % | 77 | 58 | 66 | 150 | 98 | - |
| *1: average values *2 :oxygen permeability unit : cc/m2/day/atm/@20micrometer | | | | | | | |

Incidentally, in calculating a value according the Nielsen's formula, $P_1$ (oxygen permeability of the PET film after stretching and heat treatment) was taken as the oxygen permeability measured value (=78.1 cc/m$^2$/day/atm/@20$\mu$m) obtained by above-mentioned Comparative Example 3.

Fig. 2 shows plots of the oxygen permeability-PGA molar fraction (volume %) of the films obtained in the above-mentioned Examples and the Comparative Examples, in parallel with data of Patent documents 2 and 3 (although $CO_2$ transmittance is indicated in Patent document 3, since $O_2$ permeability has been empirically known to be about 1/5 of $CO_2$ permeability about the stretching PET as shown in Table 2.11.6 on page 479 of "Plastic 'Jiten' (Encyclopedia) (first edition)" (1992, issued form Asakura Shoten K.K.), such a converted values are shown in Fig. 2) and Nielsen's theoretical values (calculated based on a constant value of L/W=37).

INDUSTRIAL APPLICABILITY

According to Table 1 and Fig. 2 discussed above, the films of the Comparative Examples and the conventional examples (i.e., data based on Patent documents 2 and 3) lacking in either stretching or heat treatment, showed gas-barrier property which was equal to or worse (higher oxygen permeabilities) than the theoretical values according to the Nielsen's formula at any blended PGA contents, whereas the molded resin product films according to the present invention obtained through stretching and heat treatment of the primarily molded products showed the gas-barrier property which exceeds the theoretical values according to the Nielsen's formula (fairly low oxygen permeabilities of 55 - 85 % of the theoretical values) at any blended PGA contents.

**Claims**

1. An aromatic polyester resin molded product, comprising: a matrix of 99 - 70 wt. parts of an aromatic polyester resin, and a disperse phase of 1 - 30 wt. parts (providing a total of 100 wt. parts together with the aromatic polyester resin) of a polyglycolic acid resin present in the matrix, wherein the molded product exhibits an oxygen permeability in its thickness direction which is in a range of 55 - 85 % of a minimum gas permeability $P_0$ determined by formula (1) below (Nielsen's theoretical formula):

$$P_0 = P_1 \times \varphi_1 / (1 + (L/2W) \times \varphi_2) \qquad \dots\, (1),$$

wherein L denotes a longer axis of the polyglycolic acid resin disperse phase; W denotes a shorter axis (thickness) of the polyglycolic acid resin disperse phase; $P_1$ denotes an oxygen permeability of the aromatic polyester resin in an oriented and crystallized state; $\varphi_1$ denotes a volumetric fraction of the aromatic polyester resin; and $\varphi_2$ denotes a volumetric fraction of the polyglycolic acid resin.

2. A molded product according to Claim 1, wherein the aromatic poly ester resin is polyethylene terephthalate.

3. A process for producing an aromatic polyester resin molded product according Claim 1 or 2, comprises: subjecting a primarily molded product of a melt-kneaded resin composition comprising 99 - 70 wt. parts of an aromatic polyester resin, and 1 - 30 wt. parts (providing a total of 100 wt. parts together with the aromatic polyester resin) of a polyglycolic acid resin to stretching and then to heat-treatment.

4. A production process according to Claim 3, wherein the primarily molded product is stretched at an areal ratio of 9 - 16 times.

5. A production process according to Claim 3 or 4, wherein the heat-treatment is performed at a temperature which is at or above crystallization temperature of the polyglycolic acid resin and below melting point of the resin composition.

FIG. 1

FIG. 2

**INTERNATIONAL SEARCH REPORT**

| International application No. |
| --- |
| PCT/JP2008/050771 |

A. CLASSIFICATION OF SUBJECT MATTER
*C08J5/00(2006.01)i, C08L67/02(2006.01)i, C08L67/04(2006.01)i*

According to International Patent Classification (IPC) or to both national classification and IPC

B. FIELDS SEARCHED

Minimum documentation searched (classification system followed by classification symbols)
C08J5/00-24, C08L67/00-08

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho  1971-2008   Toroku Jitsuyo Shinan Koho   1994-2008

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
| --- | --- | --- |
| X | JP 2005-200516 A (Mitsui Chemicals, Inc.), 28 July, 2005 (28.07.05), Claims; Par. Nos. [0010] to [0055]; examples (Family: none) | 1-5 |
| A | JP 2004-231953 A (Mitsui Chemicals, Inc.), 19 August, 2004 (19.08.04), Claims; Par. Nos. [0017] to [0068]; examples & EP 1582564 A1      & US 2006/0217523 A1 & WO 2004/063278 A1 | 1-5 |
| A | JP 10-60136 A (Kureha Chemical Industry Co., Ltd.), 03 March, 1998 (03.03.98), Full text & EP 0805175 A1      & US 5853639 A | 1-5 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 26 February, 2008 (26.02.08) | Date of mailing of the international search report 11 March, 2008 (11.03.08) |
| --- | --- |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2008/050771 |

C (Continuation).   DOCUMENTS CONSIDERED TO BE RELEVANT

| Category* | Citation of document, with indication, where appropriate, of the relevant passages | Relevant to claim No. |
|---|---|---|
| A | US 4565851 A  (Robert B. Barbee et al.),<br>21 January, 1986 (21.01.86),<br>Full text<br>(Family: none) | 1-5 |
| A | JP 2004-359909 A  (Mitsui Chemicals, Inc.),<br>24 December, 2004 (24.12.04),<br>Full text<br>(Family: none) | 1-5 |
| A | JP 11-106496 A  (Mitsui Chemicals, Inc.),<br>20 April, 1999 (20.04.99),<br>Full text<br>(Family: none) | 1-5 |
| A | JP 2003-40990 A  (Dainippon Ink And Chemicals,<br>Inc.),<br>13 February, 2003 (13.02.03),<br>Full text<br>(Family: none) | 1-5 |
| A | JP 2001-172488 A  (Nippon Shokubai Co., Ltd.),<br>26 June, 2001 (26.06.01),<br>Full text<br>& EP 1090958 A2          & US 6521717 B1 | 1-5 |
| A | JP 2004-18730 A  (Mitsui Chemicals, Inc.),<br>22 January, 2004 (22.01.04),<br>Full text<br>(Family: none) | 1-5 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10060136 A
- US 4565851 A
- JP 2005200516 A
- WO 2005090438 A

**Non-patent literature cited in the description**

- **L. E. Nielsen.** *J. Macromol. Sci.(CHEM),* 1967, vol. A1 (5), 929-942